# EUROPÄISCHE PATENTSCHRIFT

(11) **EP 1 776 246 B1**
(45) Veröffentlichungstag und Bekanntmachung des Hinweises auf die Patenterteilung: **05.05.2010**
(21) Anmeldenummer: 05768302.1
(22) Anmeldetag: 05.07.2005
(51) Int. Cl.: B60C 13/00

(54) **FAHRZEUGLUFTREIFEN**
MOTOR VEHICLE PNEUMATIC TYRE
PNEUMATIQUE DE VEHICULE

(30) Priorität: 06.08.2004 DE 102004038142
(43) Veröffentlichungstag der Anmeldung: 25.04.2007
(73) Patentinhaber: Continental Reifen Deutschland GmbH, 30165 Hannover (DE)
(72) Erfinder: METZ, Markus, 31535 Neustadt (DE)
(74) Vertreter: Finger, Karsten
(86) Internationale Anmeldenummer: PCT/EP2005/007204
(87) Internationale Veröffentlichungsnummer: WO 2006/015667

(56) Entgegenhaltungen:
- EP-A- 1 260 387
- DE-A1- 19 906 658
- PATENT ABSTRACTS OF JAPAN Bd. 1995, Nr. 09, 31. Oktober 1995 (1995-10-31) & JP 07 164831 A (BRIDGESTONE CORP), 27. Juni 1995 (1995-06-27)
- PATENT ABSTRACTS OF JAPAN Bd. 2003, Nr. 12, 5. Dezember 2003 (2003-12-05) & JP 2004 338655 A (TOYO TIRE & RUBBER CO LTD), 2. Dezember 2004 (2004-12-02)

## Beschreibung

Die Erfindung betrifft einen Fahrzeugluftreifen mit einer Karkasse, insbesondere radialer Bauart, mit Seitenwänden und mit einem Laufstreifen, wobei die Karkasse im Seitenwandbereich mit einem Seitenwandgummistreifen nach außen hin abgedeckt ist, wobei in wenigstens einem ersten Oberflächenbereich des Seitenwandgummistreifens Zeichen zur Informationsvermittlung ausgebildet sind, wobei wenigstens in einem in Umfangsrichtung des Fahrzeugluftreifens an den ersten Oberflächenbereich anschließenden zweiten Oberflächenbereich des Seitenwandgummistreifens frei von Zeichen zur Informationsvermittlung ausgebildet ist, wobei auf der Oberfläche des Seitenwandgummistreifen ein Moirée-Muster angeordnet ist, das aus der Überlagerung von wenigstens zwei linienförmigen nicht identischen Kurvenscharen ausgebildet entsteht.

Es ist bekannt, Fahrzeugluftreifen aus mehreren unterschiedlichen Schichten, beispielsweise bei Reifen radialer Bauart aus Innenschicht, Karkasse, Gürtel und Lauffläche und im Seitenbereich aus Innenschicht, Karkasse und Seitenteil von radial innen nach radial außen hin aufzubauen. Karkassen von Fahrzeugluftreifen sind üblicherweise aus einer oder mehreren Lagen von jeweils parallel zueinander in Kautschuk eingebetteten Festigkeitsträgern aufgebaut. Die einzelnen Karkassenlagen werden dabei aus durchgehenden Kautschukbändern mit parallel in Kautschukbandrichtung angeordneten Festigkeitsträgern gefertigt. Die mit den darin eingebetteten Festigkeitsträgern versehenen Kautschukbänder werden je nach gewünschter Schräglage der Festigkeitsträger zur Reifenäquatorebene im späteren Reifenaufbau üblicherweise in einzelne Stücke schräg oder bei radialem Karkassenaufbau quergeschnitten. Die schnittfreien Seiten der so erhaltenen Stücke, die zuvor bereits die Seiten des Kautschukbandes darstellten, werden dann üblicherweise zu einer durchgehenden Karkassenlage miteinander verbunden. Sobald die für den Umfang des Reifens gewünschte Karkassenlänge erreicht ist, wird die aus den einzelnen schräg- bzw. quergeschnittenen Karkassenstücken gebildete Karkassenlage auf der Wickeltrommel auf die bereits vorbereitete Innenschicht, auf eine bereits aufgelegte Karkassenschicht, oder, falls erforderlich, auf zusätzliche Zwischenschichten aufgelegt. Die Karkassenlage wird dabei um den gesamten Umfang herumgelegt und üblicherweise mit ihren Endbereichen unter Überlappung einzelner Festigkeitsträger miteinander verbunden. Anschließend werden, je nach gewünschter Ausführung, zusätzliche Karkassenschichten, Zwischenschichten, Gürtellagen und Lauffläche aufgebracht. Während des Herstellungsprozesses ist es üblich, zur Erzeugung der gewünschten Rohlingsform die mit den Karkassenlagen versehene Aufbautrommel in radialer Richtung bei der Bombage zu expandieren.

Nach der Vulkanisation und Fertigstellung des Reifens, sobald dieser für den Betriebszustand aufgepumpt wird, machen sich Verdickungsstellen, die durch die Überlappung mehrerer Festigkeitsträger im Karkassenaufbau, insbesondere in der äußeren Karkassenlage, erzeugt wurden, negativ bemerkbar. Durch die Bombage werden nämlich die Festigkeitsträger stark gedehnt und bei anschließender Vulkanisation geschrumpft, so daß sich hier besonders feste Karkassenbereiche ergeben. Sobald der Reifen im montierten Zustand mit Innendruck belastet wird, zeigt gerade dieser verfestigte Bereich ein wesentlich schwächeres Expansionsverhalten als die umgebenden Karkassenbereiche. Das abweichende Festigkeits- und Elastizitätsverhalten der Karkasse in diesen Bereichen führt zu optisch feststellbaren Einschnürungen. Insbesondere bei der Verwendung von Polyester als Festigkeitsträger der Karkasse macht sich dies besonders stark bemerkbar.

Es sind mehrfach Vorschläge gemacht worden, nach denen die durch die Überlappung entstehenden Einschnürungen gemildert oder optisch überdeckt werden sollen.

Beispielsweise wird durch die EP 0 239 160 B1 vorgeschlagen, im Bereich der Überlappung zusätzliche Spleißbänder vorzusehen. In der EP 0 407 134 B1 wid vorgeschlagen, im Überlappungsbereich zumindest im Bereich des Wulstkerns zusätzliche Gummistreifen aufzulegen, die im Kernbereich als elastische Kissen dienen sollen, so daß bei Überdruck von innen die Festigkeitsträger im Bereich der Überlappung vom Kern unter elastischer Komprimierung des Kissens nach radial außen wandern und so die Einschnürung weitgehend überdeckt werden soll. Die Qualität der Überdeckung des Einschnürverhaltens hängt dabei von der Dicke des verwendeten Gummistreifens ab. Der zusätzliche Streifen führt zum Entstehen von zusätzlichen Gleichförmigkeits-Problemen gegenüber herkömmlichen Reifen in Abhängigkeit von der Dicke des Streifens. Beiderseits des Streifens können sich zusätzlich Lufteinschlüsse zwischen der den Gummistreifen überdeckenden Schicht und der Karkassenschicht bilden in Abhängigkeit von der Dicke des Gummistreifens. Mit hohem Aufwand, beispielsweise durch zusätzliches Anrollen der Gummistreifen überdeckenden Schicht, ist ein Verteilen der Lufteinschlüsse zumindest bei dünnen Gummistreifen zwischen überdeckender Schicht und Karkasse denkbar, aber die langflächige Überdeckung der Karkassenlage durch die überdeckende Schicht verhindert ein Entfernen der Lufteinschlüsse. Soweit sie aus dem unmittelbaren Bereich des Gummistreifens verteilt wurden, bleiben sie dennoch im wesentlichen als Lufteinschlüsse zwischen Karkasse und überdeckender Schicht erhalten und führen zu zusätzlichen Problemen hinsichtlich der Haltbarkeit des Reifens. Aufgrund der hierdurch entstehenden Probleme sind zufriedenstellende Überdeckungen der Einschnürungen mit Hilfe eines derartigen zusätzlichen Gummistreifens, wenn überhaupt, nur mit hohem zusätzlichen Aufwand zur Lufteinschlußbeseitigung und zur Beseitigung der zusätzlichen Gleichförmigkeits-Probleme zu realisieren.

Aus der DE 199 06 658 C2 ist es bekannt, auf dem Seitenwandgummistreifen ein Moirée-Muster anzuordnen, das aus der Überlagerung von wenigstens zwei linienförmigen Kurvenscharen ausgebildet ist. Die Ausbildung eines Moirée-Musters aus linienförmigen Erhebungen bewirkt durch die aufgrund der Interferenzen der Linienmuster bedingte Verteilung der Intensität des reflektierten Lichtes, eine derartige Überlagerung an der Reifenseitenwand, dass diese durch mögliche Einschnürungseffekte bedingten vergleichsweise geringen Reflektionsveränderungen vom menschlichen nur noch schwer wahrgenommen werden. Dies kann im Rahmen der Reifenseitenwanddekorgestaltung ohne die aufwendigen aus der EP0407134B1 bekannten Maßnahmen erfolgen.

Im Bereich der Reifenseitenwand werden auf dem Seitenwandgummistreifen üblicherweise in einzelnen Umfangsabschnitten wichtige Informationen über den Fahrzeugluftreifen als Schrift- oder Bildzeichen ausgebildet. Die zur Überdeckung von Einschnüreffekten gewünschten Effekte des Moirée-Musters können die Wahrnehmbarkeit der Schrift- oder Bildzeichen beeinträchtigen.

Der Erfindung liegt daher die Aufgabe zu Grunde, eine verbesserte Wahrnehmbarkeit von zur auf der Oberfläche einer Reifenseitenwand aufgebrachten Informationsvermittlungszeichen für das menschliche Auge unter Beibehaltung einer einfachen Überdeckung unerwünschter Unregelmäßigkeiten der Reifenseitenwand unter Nutzung der vorteilhaften Wirkung des Moirée-Effektes zu ermöglichen.

Die Aufgabe wird erfindungsgemäß durch die Ausbildung eines Fahrzeugluftreifens mit einer Karkasse, insbesondere radialer Bauart, mit Seitenwänden und mit einem Laufstreifen, wobei die Karkasse im Seitenwandbereich mit einem Seitenwandgummistreifen nach außen hin abgedeckt ist, wobei in wenigstens einem ersten Oberflächenbereich des Seitenwandgummistreifens Zeichen zur Informationsvermittlung ausgebildet sind, wobei wenigstens in einem in Umfangsrichtung des Fahrzeugluftreifens an den ersten Oberflächenbereich anschließenden zweiten Oberflächenbereich des Seitenwandgummistreifens frei von Zeichen zur Informationsvermittlung ausgebildet ist, wobei auf der Oberfläche des Seitenwandgummistreifen ein Moirée-Muster angeordnet ist, das aus der Überlagerung von wenigstens zwei linienförmigen nicht identischen Kurvenscharen ausgebildet entsteht, gemäß den Merkmalen von Anspruch 1 gelöst, bei dem im zweiten Oberflächenbereich auf dem Seitenwandgummistreifen ein Moirée-Muster angeordnet ist, das aus der Überlagerung von wenigstens zwei linienförmigen nicht identischen Kurvenscharen ausgebildet entsteht, und bei dem im ersten Oberflächenbereich auf dem Seitenwandgummistreifen ein Moirée-freies Muster angeordnet ist, das aus einer oder mehreren linienförmigen Kurvenscharen ausgebildet ist.

Das die Informationszeichen umgebende Moirée-freie Muster verstärkt die Lichtreflexe der aus diesem Muster besonders hervorgehobene Unregelmäßigkeiten der Reifenseitenwand darstellenden Informationszeichen, so dass in diesem ersten Oberflächenbereich, in dem die wesentlichen Unregelmäßigkeiten die zur Erkennung beabsichtigten Informationszeichen sind, diese besonders gut vom menschlichen Auge wahrnehmbar sind. In diesem Oberflächenbereich überdecken diese durch die Informationsvermittlungszeichen selbst bewirkten gezielten und relativ starken Unregelmäßigkeiten andere beispielsweise aufgrund von Einschnüreffekten bedingten Unregelmäßigkeiten der Reifenseitenwand so stark, dass diese in diesem Oberflächenbereich vom menschlichen Auge nur kaum wahr genommen werden. In dem in Umfangsrichtung des Fahrzeugluftreifens benachbarten zweiten Oberflächenbereich, werden durch das Moirée-Muster die in diesem Bereich wesentlichen und nicht zur Erkennung gewünschten, unbeabsichtigten Unregelmäßigkeiten zuverlässig durch Nutzung des Moirée-Effektes überdeckt. Auf diese Weise kann mit einfachen Mitteln ermöglicht werden, dass sowohl beabsichtigte Unregelmäßigkeiten in Form von Informationsvermittlungszeichen vom menschlichen Auge gut erfasst und nicht zur Erkennung beabsichtigte Unregelmäßigkeiten so überdeckt werden, dass sie vom menschlichen Auge nur schwer wahrgenommen werden.

Besonders vorteilhaft ist die Ausbildung eines Fahrzeugluftreifens gemäß den Merkmalen von Anspruch 2, bei dem im Übergang der beiden in Umfangsrichtung des Fahrzeugluftreifens benachbarten Oberflächenbereiche Kurven einer ersten Kurvenschar des ersten Umfangsabschnitts fließend in jeweils eine Kurve einer ersten Kurvenschar des zweiten Umfangsabschnitts übergehen. Hierdurch wirkt die gesamte aus den beiden Oberflächenbereichen gebildete Oberfläche als eine fließend übergangslose Oberfläche, so dass das menschlche Auge unter Einfluss der unterschiedlichen Effekte der beiden Oberflächenausbildungen solche Unregelmäßigkeiten der Reifenseitenwandoberfläche, die es nicht wahrnehmen soll, nicht wahrnimmt und solche Unregelmäßigkeiten, die es zur Information wahrnehmen soll, besonders gut wahrnimmt, wobei die unterschiedliche Ausbildung der Oberflächen nur erschwert erkennbar ist.

Die Ansprüche 3 bis 15 beinhalten bevorzugte Ausgestaltungen der Erfindung.

Die Erfindung wird im folgenden anhand der in den Fig. 1 bis 8 näher dargestellten Ausführungsbeispiele erläutert.

Hierin zeigen:
- Fig. 1: den schematischen Aufbau eines Reifens in Querschnittsdarstellung,
- Fig. 2: den schematischen Reifenaufbau in perspektivischer Darstellung,
- Fig. 3: schematische Darstellung der Lagenüberdeckung im Aufbauprozeß,
- Fig. 4: schematische Darstellung einer Seitenwand mit unterschiedlichen Umfangsabschnitten,
- Fig. 5: schematische Darstellung einer Seitenwand zur Erläuternung der Moirée-Muster,
- Fig. 6: schematische Darstellung eines zweiten Oberflächenbereichs einer Seitenwand ohne Informationsvermittlungszeichen jedoch mit Moirée-Muster,
- Fig. 7: schematische Darstellung eines ersten Oberflächenbereichs einer Seitenwand mit Informationsvermittlungszeichen jedoch mit Moirée-freiem Muster,
- Fig. 8: schematische Darstellung des Übergangs zwischen erstem und zweiten Oberflächenbereich.

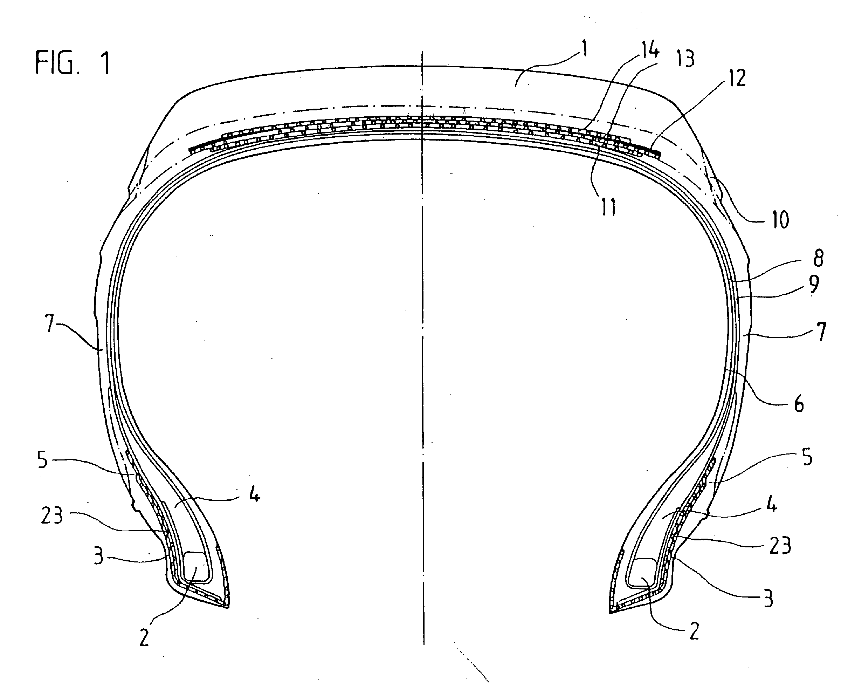

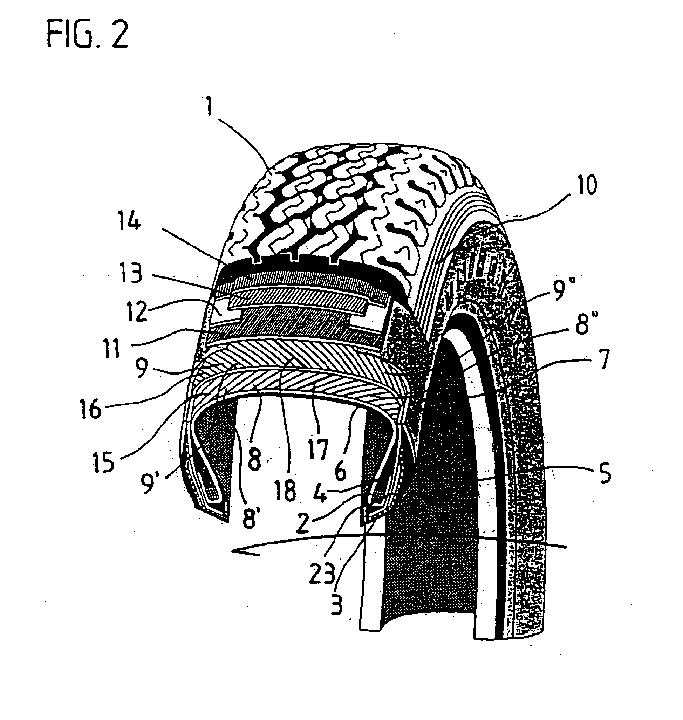

In Fig. 1 und 2 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und den linken Kern 2 mit Kernprofil 4 reicht, um den er in herkömmlicher Weise gelegt ist. Über der ersten Karkassenlage 8 ist in herkömmlicher Weise eine zweite Karkassenlage 9 gelegt, die sich ebenfalls von der in Fig. 1 rechts dargestellten Seite des Reifens bis zur links dargestellten Seite erstreckt. Beide Karkassenlagen sind in herkömmlicher Weise aus einer Karkassenlagen-Kautschukmischung bekannter Art und mit darin eingebetteten, jeweils zueinander parallel liegenden, textilen Fäden 8 bzw. 9 bekannter Bauart aufgebauten Kautschukbändern hergestellt.

In bekannter Weise werden diese Kautschukbänder an einem Schneidetisch schräg geschnitten und dann mit ihren parallelen nicht geschnittenen Seiten aneinandergefügt.

Zu jeder Karkassenlage sind in Fig. 2 jeweils zwei derartige Karkassenstücke 8', 8" bzw. 9', 9" dargestellt. Das Karkassenlagenstück 8' ist an der Fügestelle 17 unter Überlappung einzelner Fäden auf das Karkassenlagenstück 8" gelegt. Ebenso ist das Karkassenlagenstück 9' an der Fügestelle 18 unter Überlappung auf das Karkassenstück 9" gelegt.

In herkömmlicher Weise ist im Ausführungsbeispiel von Fig. 2 im Kernbereich über einen Wulststreifen 23 und den Wulstverstärker 3 ein Homprofil 5 und von diesem ausgehend bis in den Schulterbereich reichend ein Seitenstreifen 7 aufgelegt. Über den Umfang des Reifens reichen außerhalb der Karkassenlagen liegend mehrere Stahlgürtellagen 11, 13 und eine Nylonbandage 14 mit dazwischen befindlichem Gürtelkantenschutz 12 bekannter Art. Im Schulterbereich sind zusätzlich Schulterstreifen 10 aufgelegt. Den Abschluß des Reifenaufbaus bildet in bekannter Weise ein Laufstreifen 1.

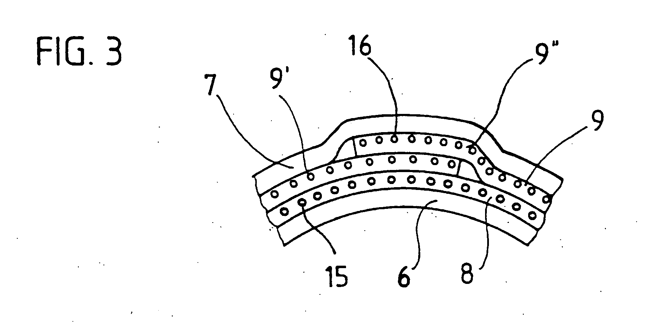

In Fig. 3 ist die Überlappungsstelle 18 in Schnittdarstellung senkrecht zu den Karkaßfäden dargestellt. Die innere Karkassenschicht 8 ist dabei in bekannter Weise mit Karkaßfäden 15 ausgebildet. Die Karkaßfäden 15 liegen in der zentralen Ebene der Karkaßlage 8. In der äußeren Karkaßlage 9 sind Karkaßfäden 16 in der zentralen Ebene der Karkassenschicht 9 eingebettet.

Bei der Bombage und der Vulkanisation werden die Karkaßfäden 16 aus Polyester stark gedehnt und anschließend wieder geschrumpft. Dabei ziehen sich die Polyesterfäden der sich überlappenden Enden 9" und 9' im Überlappungsbereich der Karkasse 9 stark zusammen. Bei der Expansion des Reifens und somit der Karkassenlage 9 in den Betriebszustand mit Überdruck im Reifen dehnen sich die Karkaßfäden 16 in diesem derart verfestigten Überlappungsbereich weniger stark als die Karkaßfäden außerhalb des Überlappungsbereiches der Karkassenenden 9', 9", so daß im Bereich der Überlappung eine Einschnürung der Seitenwand erfolgt.

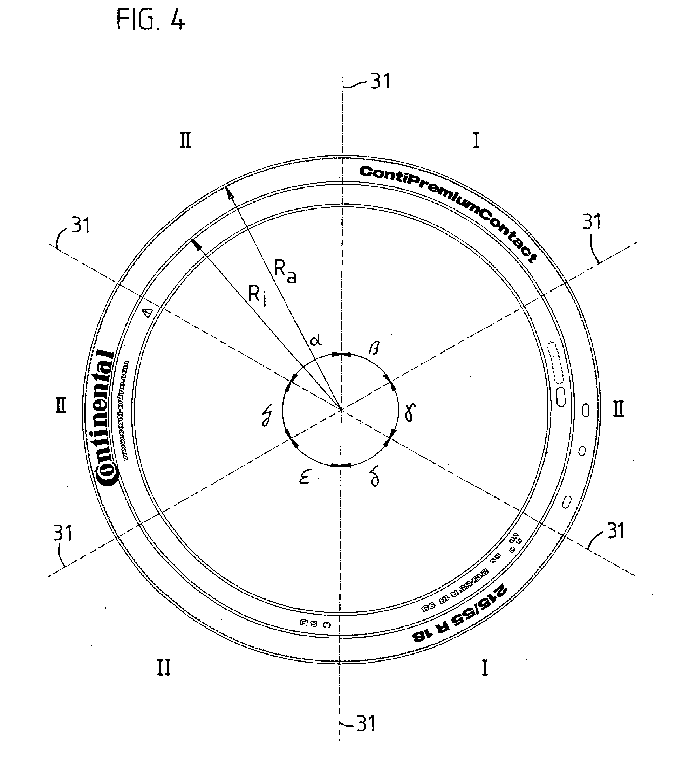

Wie in Fig. 4 dargestellt ist, ist die Reifenseitenwand auf der Außenseite des Seitenwandstreifens 7 mit einem Seitenwanddekor 30 ausgebildet. Das Seitenwanddekor 30 erstreckt sich dabei in radialer Richtung R des Fahrzeugluftreifens zwischen einem Innenradius Rᵢ und einem Außenradius Rₐ und in Umfangsrichtung U des Fahrzeugluftreifens über den gesamten Fahrzeugluftreifen. Im gezeigten Ausführungsbeispiel ist Seitenwanddekor 30 aus drei ersten Umfangsabschnitten I, die sich über die Umfangswinkelabschnitte β, δ und ζ erstrecken, und aus drei zweiten Umfangsabschnitten II, die sich über die Umfangswinkelabschnitte α, γ und ε erstrecken, ausgebildet. In den Oberflächen der ersten Umfangsabschnitte I des Reifendekors sind jeweils Zeichen zur Vermittlung von Information über den Fahrzeugluftreifen beispielsweise Unterscheidung anderer Fahrzeugluftreifen oder über technische Details des Fahrzeugluftreifens zum Beispiel durch Angabe der Reifendimension in bekannter nicht näher dargesstellter Weise ausgebildet. In den Oberflächen der zweiten Umfangsabschnitte II des Reifendekors sind keine derartigen Zeichen zur Vermittlung von Information über den Fahrzeugluftreifen beispielsweise Unterscheidung anderer Fahrzeugluftreifen oder über technische Details des Fahrzeugluftreifens zum Beispiel durch Angabe der Reifendimension in bekannter nicht näher dargesstellter Weise ausgebildet. Die Umfangsabschnitte I und II sind in Umfangsrichtung in alternierender Reihenfolge jeweils unmittelbar hintereinander ausgebildet. An beiden in Umfangsrichtung U ausgebildeten Enden eines Umfangsabschnitts I beginnt jeweils in einer jeweils mit Bezugszeichen 31 dargestellten Umfangsposition ein Umfangsabschnitt II. An beiden in Umfangsrichtung U ausgebildeten Enden eines Umfangsabschnitts II beginnt jeweils in einer jeweils mit Bezugszeichen 31 dargestellten Umfangsposition ein Umfangsabschnitt I. Die Summe der Winkel α, β, γ, δ, ε und ζ bilden im dargestellten Ausführungsbeispiel 360°. Im dargestellten Ausführungsbeispiel sind die Winkel α, γ und ε gleich groß gewählt: α = γ = ε. Ebenso sind im dargestellten Ausführungsbeispiel sind die Winkel β, δ und ζ gleich groß gewählt: β = δ = ζ. Beispielsweise sind, wie im gezeigten Ausführungsbeispiel die Winkel α, β, γ, δ, ε und ζ gleich groß gewählt: α = β = γ = δ = ε = ζ = 60°.

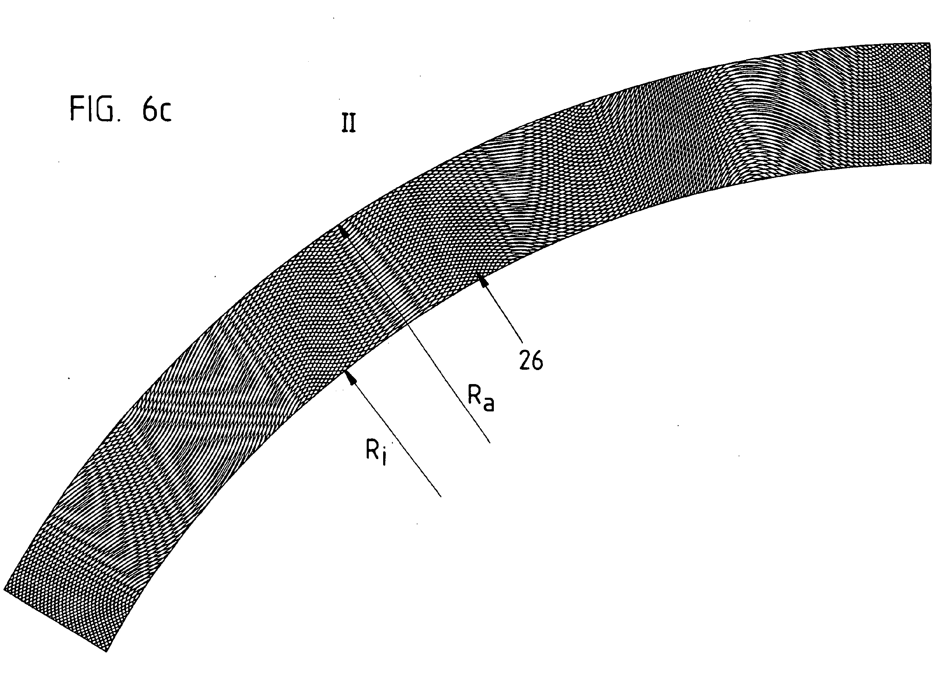

Das Seitenwanddekor 30 ist ein in dem radialen Erstreckungsbereich zwischen dem Innenradius Rᵢ und dem Außenradius Rₐ in dem zweiten Umfangsbereichen II jeweils - wie in Fig. 6c dargestellt ist - ein aus zwei sich überlagernden Linienmustern gebildetes Moirée-Muster. Ein Moirée-Muster ist ein Interferenzbild wenigstens zweier überlagerter Linienmuster, bei dem durch Interferenz eine Helligkeitsverteilung in Form einer stehenden Welle entsteht.

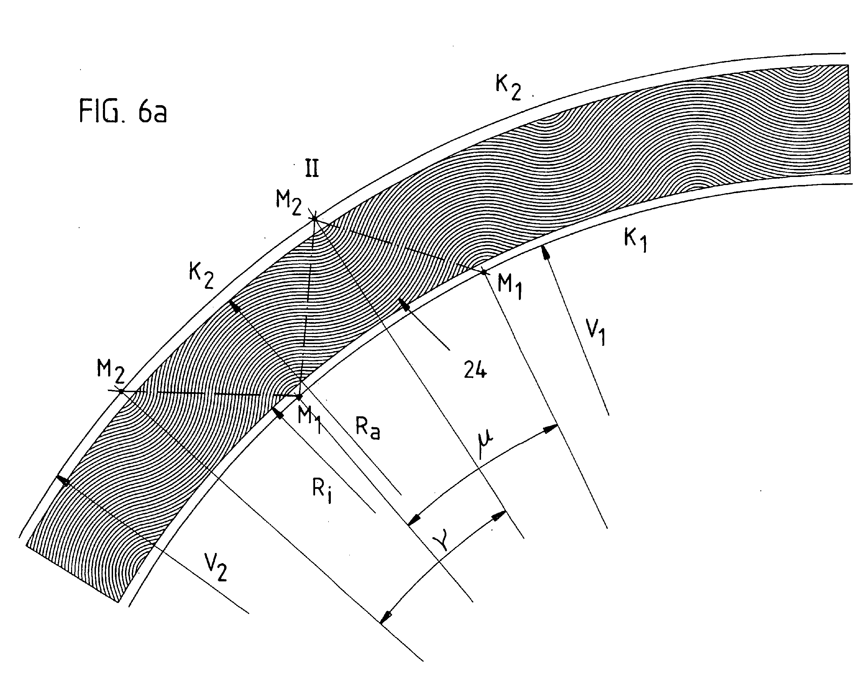

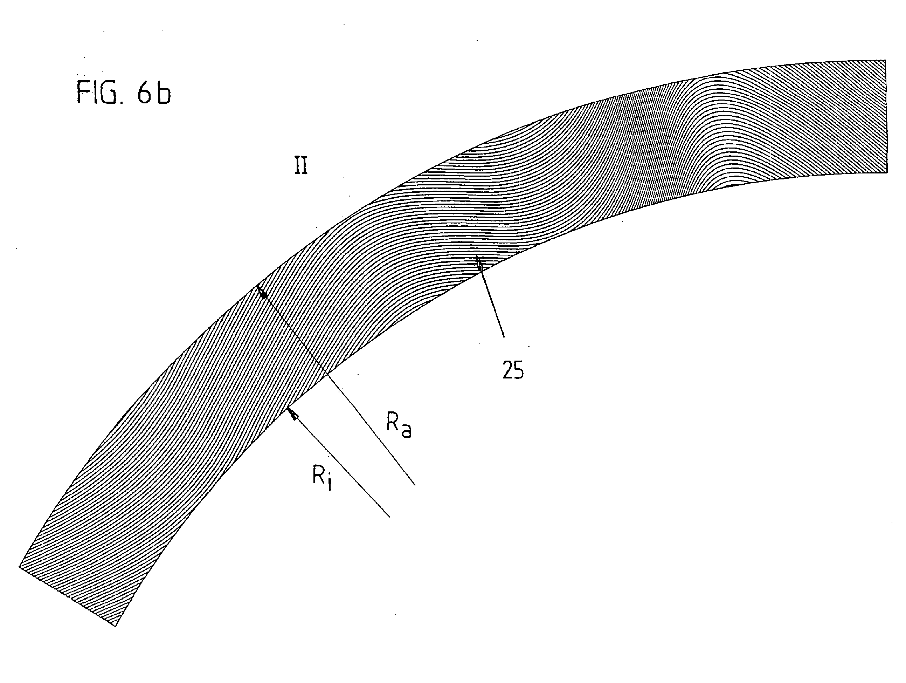

Das Moirée-Muster von Fig. 6c ist durch Überlagerung der beiden in den Fig.6a und Fig.6b dargestellten Kurvenscharen erzeugt. Die eine - in Fig.6a dargestellte - Kurvenschar ist aus einer Vielzahl von in radialer Richtung des Fahrzeugluftreifens voneinander beabstandeten wellenförmigen Kurven mit regelmäßiger Wellenform ausgebildet, die sich in Umfangsrichtung des Fahrzeugluftreifens erstrecken.

In der in Fig.6a dargestellten Ausführung ist die Kurvenschar wie folgt erzeugt: Auf einer inneren konzentrisch zum Fahrzeugluftreifen ausgebildeten Kreisbahn K1 werden jeweils im geleichen Winkel µ zueinander innere Mittelpunkte M₁ und auf einer äußeren konzentrisch zum Fahrzeugluftreifen ausgebildeten Kreisbahn K2 werden jeweils im geleichen Winkel v zueinander innere angeordnet. Die Mittelpunkte M₂ sind dabei jeweils auf der Mittelsenkrechten zu zwei benachbarten Mittelpunkte M₁ angeordnet. Um die Mittelpunkte M₁ und die Mittelpunkte M₂ herum werden jeweilseine gegleiche Anzahl mit gleichem radialen Abstand zum zugehörigen Mittelpunkt M₁ bzw. M₂ zur anderen Kreisbahn K2 bzw K1 hin Kreissegmente gebildet, so dass jeweils ein um einen Mittelpunkt M₁ gebildetes Kreissegment fluchtend in jeweils ein korrespondierendes Kreissegment der benachbarten Mittelpunkt M₂ übergeht. Der Übergang erfolgt auf einer die Mittelpunkte M₁ und M₂ verbindenden Strecke.

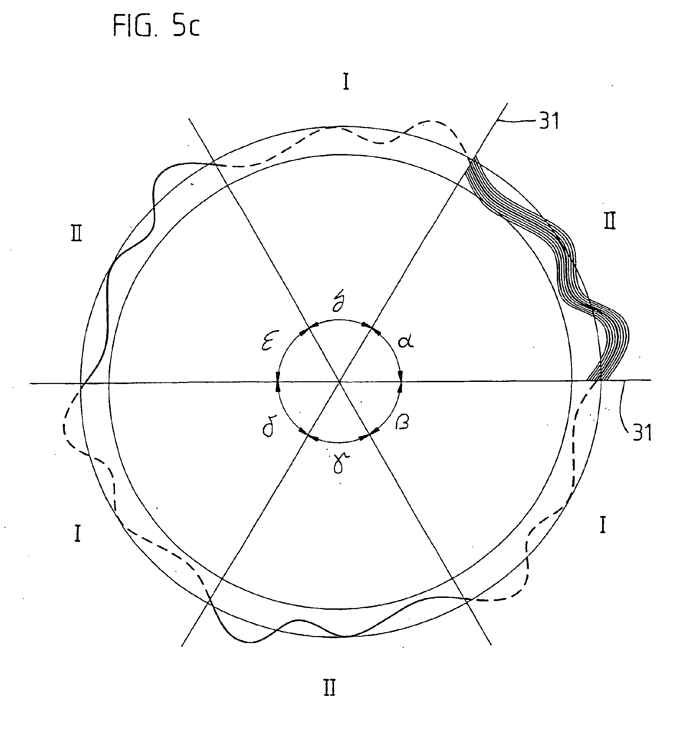

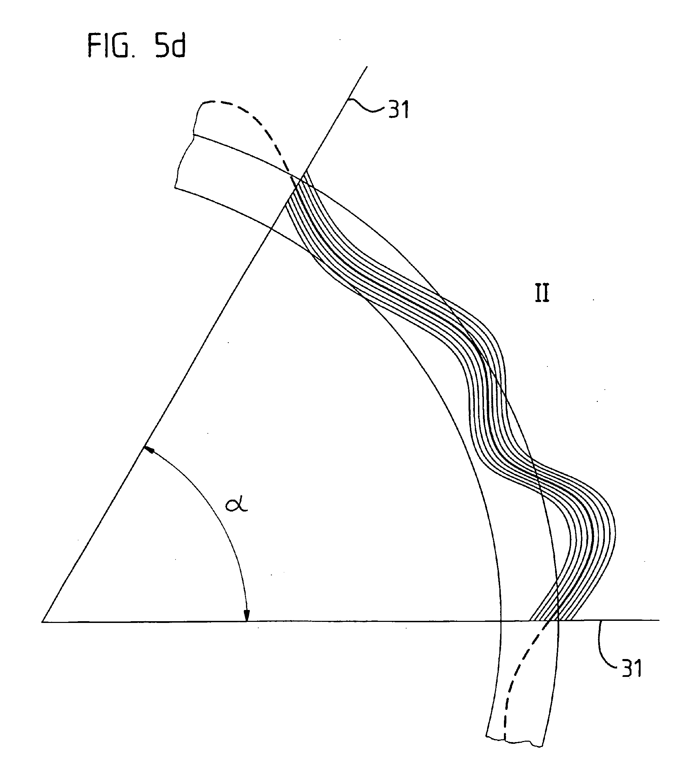

Die andere - in Fig.6b dargestellte - Kurvenschar ist aus aus einer Vielzahl von in jeder Umfangsposiion des Fahrzeugluftreifens jeweils in dieser Umfangsposition gleichem radialem Abstand r₁ voneinander beabstandeten wellenförmigen Kurven mit unregelmäßiger Wellenform ausgebildet, die sich in Umfangsrichtung des Fahrzeugluftreifens erstrecken. Die Nulldurchgänge der Kurven erfolgen in gleicher Umfangsposition. Umfangsbezogene Phasen der Kurvenschar und die Amplituden ändern sich längs ihrer Erstreckung in unregelmäßiger Abfolge. Dies ist in den Fig.5c und 5d deutlich zu erkennen.

In Fig6c sind die beiden Kurvenscharen der Fig.6a und Fig.6b überlagert dargestellt. Es entsteht ein Interferenzbild der beiden Kurvenscharen, wobei im Bereich von Linienschnittpunkten besonders helle Bereiche entstehen. Das gesamte Interferenzbild zeigt dabei eine Helligkeitsverteilung wie bei einer wellenförmigen Ausbreitung mit stehender Welle.

Im Seitenwanddekor sind dabei die dunklen Linien der beiden Kurvenscharen feine geprägte oder erhabene Rillen in der Gummioberfläche. Die Rillen weisen eine runde oder eckige Querschnittskontur auf.

Die unregelmäßige Helligkeitsverteilung, die durch den Moire-effekt auf der Seitenwand erzeugt wird, überlagert die durch die Reifenseitenwandeinschnürung erzeugte Abweichung in der Helligkeitsverteilung. Die durch die Reifenseitenwandeinschnürung erzeugte Abweichung in der Helligkeitsverteilung ist als solche nicht mehr eindeutig identifizierbar. Erkennbar ist lediglich eine offensichtlich durch das Reifendekor erzeugte ungleichmäßige Helligkeitenverteilung.

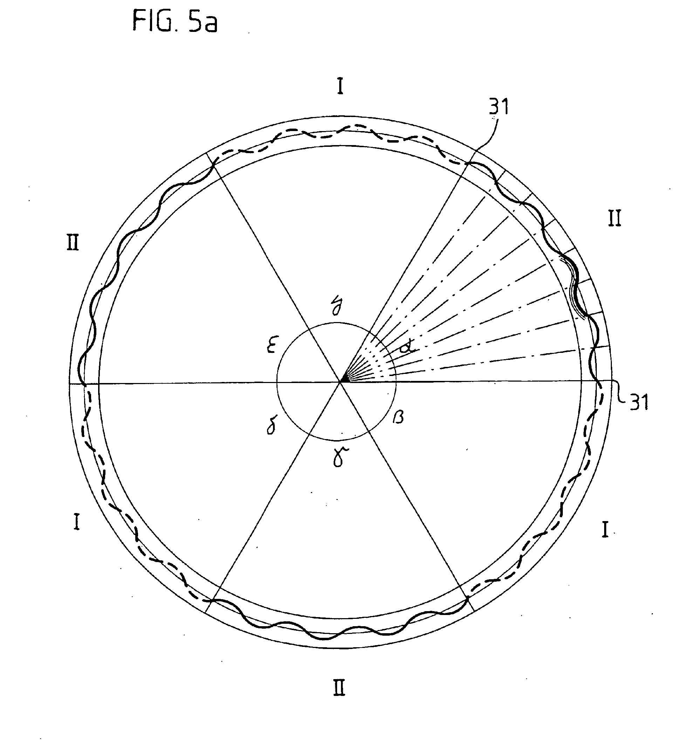

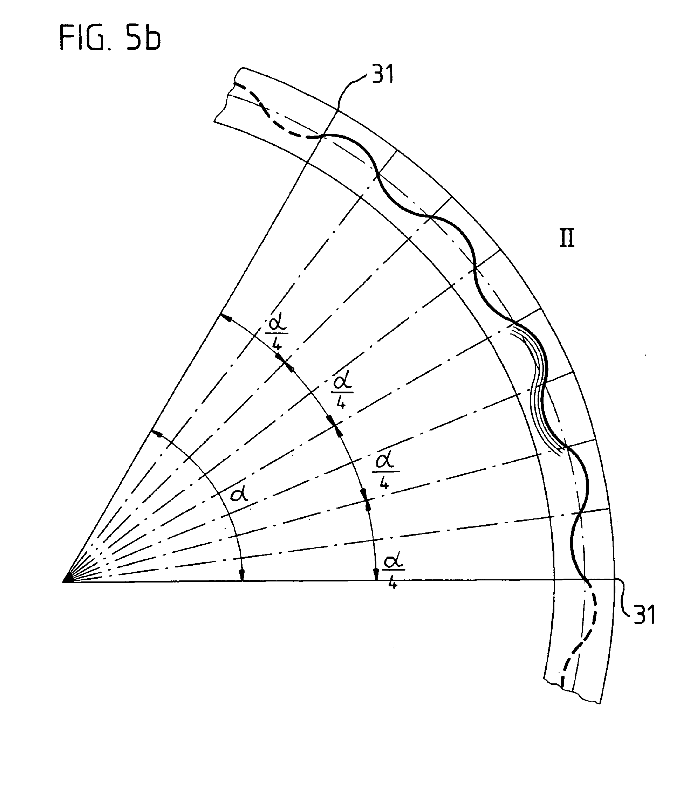

In einer anderen Ausbildung wird alternativ zu der in Fig. 6a dargestellten und beschriebenen Kurvenschar eine Kurvenschar ausgebildet, die beispielsweise aus einer Vielzahl von jeweils mit gleichem Abstand in radialer Richtung des Fahrzeugluftreifens voneinander beabstandeten wellenförmigen Kurven mit regelmäßiger Wellenform ausgebildet, die sich in Umfangsrichtung des Fahrzeugluftreifens erstrecken. Die Linien der Nulldurchgänge der wellenförmigen Kurven sind jeweils konzentrische Kreisbahnen - beispielweise konzentrisch zum Fahrzeugreifen. Die Nulldurchgänge der Kurven erfolgen in gleicher Umfangsposition. Umfangsbezogene Phasen und die Amplituden der Kurven sind jeweils über die gesamte Erstreckung konstant. Dies ist in den Fig.5a und 5b deutlich zu erkennen, in denen zur Vereinfachnung lediglich eine Kurve der Kurvenschar mit ihrer Nullinie über die gesamte Erstreckung eingezeichnet ist.

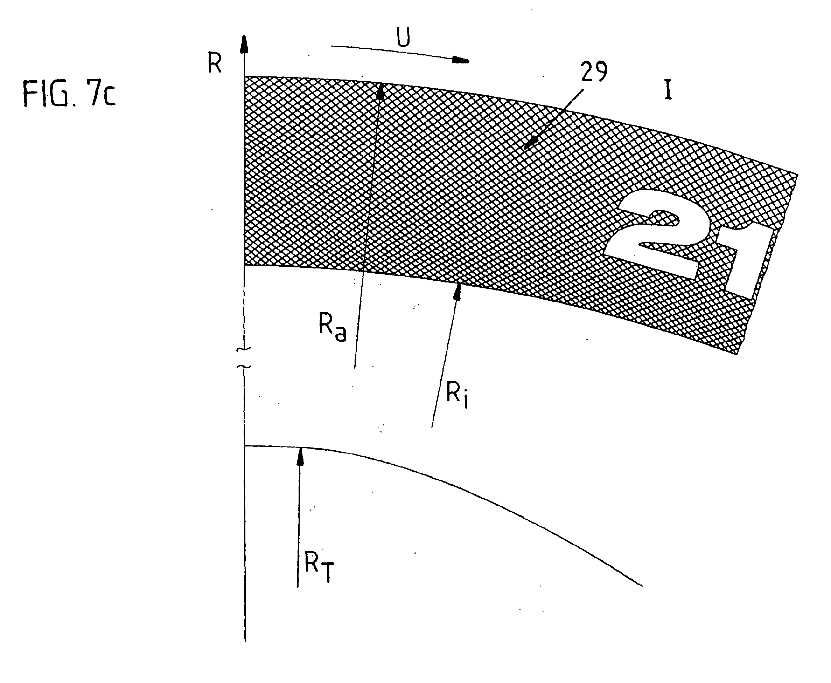

Das Seitenwanddekor 30 ist ein in dem radialen Erstreckungsbereich zwischen dem Innenradius Rᵢ und dem Außenradius Rₐ in den ersten Umfangsbereichen I jeweils - wie in Fig. 7c dargestellt ist - ein aus zwei sich überlagernden Linienmustern gebildetes Moirée-freies Muster.

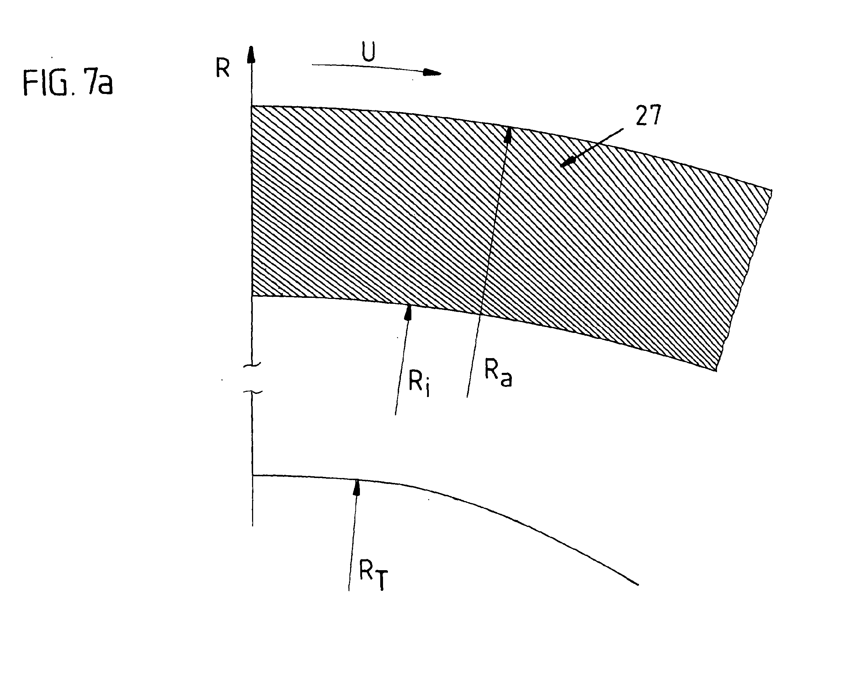

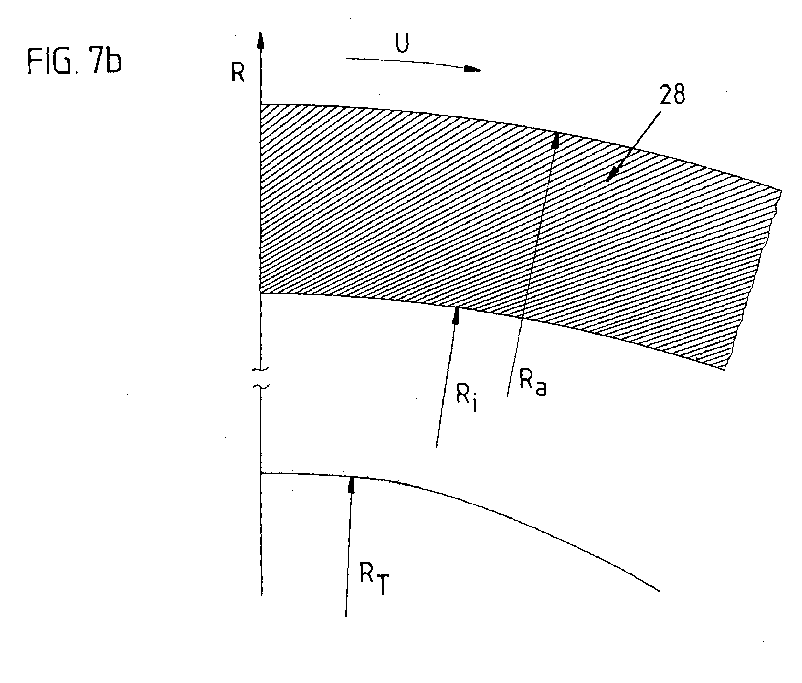

Das Moirée-freie Muster von Fig. 7c ist durch Überlagerung der beiden in den Fig.7a und Fig.7b dargestellten Kurvenscharen erzeugt. Die eine - in Fig.7a dargestellte - Kurvenschar ist aus einer Vielzahl von an einen Kreis mit einem Radius R_{T} anliegenden Tangenten gebildet, wobei der Abstand benachbarter Tangentenpunkte am Kreis jeweils gleich ist. Die andere - in Fig.7b dargestellte - Kurvenschar ist ebenfalls aus einer Vielzahl von an einen Kreis mit einem Radius R_{T} anliegenden Tangenten gebildet, wobei der Abstand benachbarter Tangentenpunkte am Kreis jeweils gleich ist. Die Steigungsrichtung der Tangenten der ersten Kurvenschar ist zur Steigungsrichtung der Tangenten der zweiten Kurvenschar entgegengerichtet. Diese beiden in den Figuren 7a und 7b schematisch zur Tangentenbildung dargestellten Kreise zur Bildung der Kurvenscharen sind gleich groß und konzentrisch. In einem Ausführungsbeispiel sind diese beiden Kreise konzentrisch zum Fahrzeugreifen. Wie in Fig. 7c dargestellt ist, ist das Muster in einem Ausführungsbeispiel durch die in die Oberfläche der Reifenseitenwand im Umfangsbereich I ausgebildeten Zeichen zur Informationsvermittlung unterbrochen.

Im Seitenwanddekor sind dabei die dunklen Linien der beiden Kurvenscharen feine geprägte oder erhabene Rillen in der Gummioberfläche. Die Rillen weisen eine runde oder eckige Querschnittskontur auf.

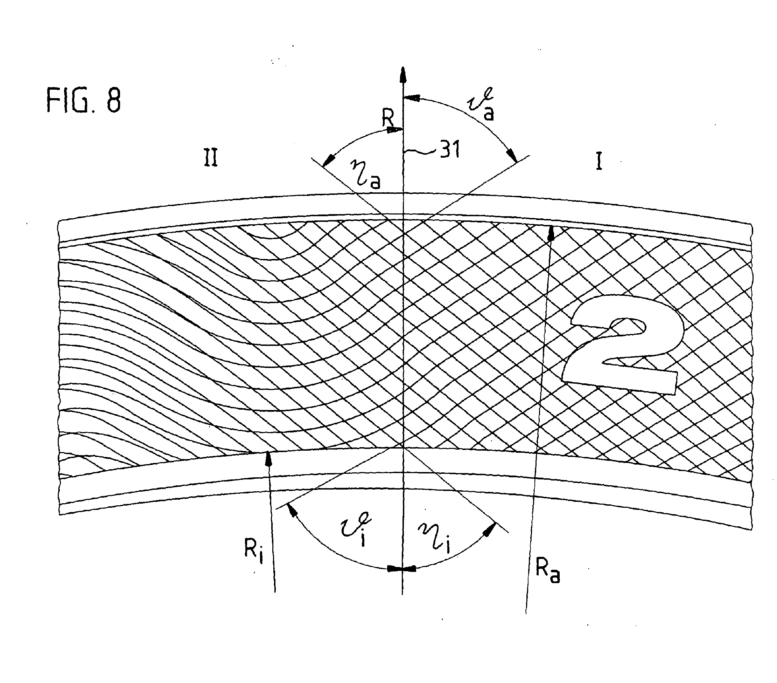

In Figur 8 ist der Übergang 31 der Kurvenscharen der Umfangsbereiche I zu den Kurvenscharen der Umfangsbereiche II an der Segmentgrenze zwischen diesen Bereichen näher dargestellt. Zur besseren Übersichtlichkeit sind ist dabei nur jede sechste Kurve einer Kurvenschar dargestellt. Wie deutlich erkennbar, geht jeweils eine Kurve einer ersten Kurvenschar des Umfangsbereichs II fließend in eine mit im Übergang 31 gleicher Steigung ausgebildete ihr korrespondierend zugeordnete Kurve einer ersten Kurvenschar des Umfangsbereichs I über. Wie deutlich erkennbar, geht jeweils eine Kurve einer zweiten Kurvenschar des Umfangsbereichs II fließend in eine mit im Übergang 31 gleicher Steigung ausgebildete ihr korrespondierend zugeordnete Kurve einer zweiten Kurvenschar des Umfangsbereichs I über. So geht beispielsweise die im Übergang 31 in radialer Richtung des Fahrzeugluftreifens am weitesten innen gelegene Kurve der ersten Kurvenschar des Umfangsbereichs II mit dem im Übergang 31 ausgebildeten Steigungswinkel ηᵢ fließend in eine mit im Übergang 31 gleichem Steigungswinkel ηᵢ ausgebildete ihr korrespondierend zugeordnete im Übergang 31 in radialer Richtung des Fahrzeugluftreifens am weitesten innen gelegene Kurve der ersten Kurvenschar des Umfangsbereichs I über. Ebeso geht die im Übergang 31 in radialer Richtung des Fahrzeugluftreifens am weitesten innen gelegene Kurve der zweiten Kurvenschar des Umfangsbereichs II mit dem im Übergang 31 ausgebildeten Steigungswinkel θᵢ fließend in eine mit im Übergang 31 gleichem Steigungswinkel θᵢ ausgebildete ihr korrespondierend zugeordnete im Übergang 31 in radialer Richtung des Fahrzeugluftreifens am weitesten innen gelegene Kurve der zweiten Kurvenschar des Umfangsbereichs I über. Ebenso geht beispielsweise die im Übergang 31 in radialer Richtung des Fahrzeugluftreifens am weitesten außen gelegene Kurve der ersten Kurvenschar des Umfangsbereichs II mit dem im Übergang 31 ausgebildeten Steigungswinkel ηₐ fließend in eine mit im Übergang 31 gleichem Steigungswinkel ηₐ ausgebildete ihr korrespondierend zugeordnete im Übergang 31 in radialer Richtung des Fahrzeugluftreifens am weitesten außen gelegene Kurve der ersten Kurvenschar des Umfangsbereichs I über. Ebenso geht die im Übergang 31 in radialer Richtung des Fahrzeugluftreifens am weitesten außen gelegene Kurve der zweiten Kurvenschar des Umfangsbereichs II mit dem im Übergang 31 ausgebildeten Steigungswinkel θₐ fließend in eine mit im Übergang 31 gleichem Steigungswinkel θₐ ausgebildete ihr korrespondierend zugeordnete im Übergang 31 in radialer Richtung des Fahrzeugluftreifens am weitesten außen gelegene Kurve der zweiten Kurvenschar des Umfangsbereichs I über.

In den Fig.5a,5b,5c,5d ist ein Beispiel gleich großer Umfangsbereiche mit α = β = γ = δ = ε = ζ = 60° dargestellt, bei demdie ersten und zweiten in den Figuren 6a und 6b gezeigten Kurvenscharen durchgehend über den gesamten Umfang des Fahrzeugluftreifens hinweg konzipiert, wobei diese lediglich in den Umfangsbereichen II im Fahrzeugluftreifen zur Erzeugung des Moireemusters verwirklicht sind. Die gestrichelt dargestellte gedachte Fortführung in den Umfangsbereichen I werden im Fahrzeugluftreifen nicht verwirklicht, sondern durch die in den Fig. 7a und 7b gezeigten Kurvenscharen ersetzt.. Wie in den Fig. 5a,5b,5c,5d erkennbar sind alle Übergänge 31 zwischen den Umfangsbereichen I und II gleich gestaltet.

Hierzu sind die wellenförmigen Kurven der in Fig. 6a dargestellten ersten Kurvenschar des zweiten Umfangsbereichs II mit Ihrer Frequenz so ausgebildet, dass sie sich zwischen den beiden Übergängen 31 eines Umfangsbereichs II mit einem ganzzahligen Vielfaches der jeweiligen Wellenlänge erstrecken. Die wellenförmigen Kurven der in Fig. 6b dargestellten ersten Kurvenschar des zweiten Umfangsbereichs II so ausgebildet, dass sie in gleicher radialer Position am Fahrzeugluftreifen und mit gleicher Steigung beide Übergang 31 treffen.

Es ist auch denkbar, Karkaßfäden aus anderem Material als aus Polyesterfäden auszubilden. Besonders sinnvoll ist ein Reifenseitenwanddekor mit Moirée-Muster in den Umfangsbereichen II bei Reifen auszubilden, bei denen eine besonders große Gefahr erkennbarer Einschnürungen auftritt.

### Bezugszeichenliste

### (Teil der Beschreibung)

- 1: Laufstreifen
- 2: Kern
- 3: Wulstverstärker
- 4: Kern-Profil
- 5: Horn-Profil
- 6: Innenschicht
- 7: Seitenstreifen
- 8: Karkassenlage
- 9: Karkassenlage
- 10: Schulterstreifen
- 11: Gürtellage
- 12: Gürtelkantenschutz
- 13: Gürtellage
- 14: Gürtellage
- 15: Karkaßfaden
- 16: Karkaßfaden
- 17: Überlappungsstellen
- 18: Überlappungsstellen
- 19: Kautschukschicht
- 23: Wulststreifen
- 24: Kurvenschar
- 25: Kurvenschar
- 26: Moirée Muster
- 27: Kurvenschar
- 28: Kurvenschar
- 29: Moirée-freies Muster
- 30: Seitenwanddekor
- 31: Übergang

## Patentansprüche

1. Fahrzeugluftreifen mit einer Karkasse, insbesondere radialer Bauart, mit Seitenwänden und mit einem Laufstreifen (1),
wobei die Karkasse im Seitenwandbereich mit einem Seitenwandgummistreifen (7) nach außen hin abgedeckt ist,
wobei in wenigstens einem ersten Oberflächenbereich des Seitenwandgummistreifens (7) Zeichen zur Informationsvermittlung ausgebildet sind,
wobei wenigstens in einem in Umfangsrichtung des Fahrzeugluftreifens an den ersten Oberflächenbereich anschließenden zweiten Oberflächenbereich des Seitenwandgummistreifens (7) frei von Zeichen zur Informationsvermittlung ausgebildet ist,
wobei auf der Oberfläche des Seitenwandgummistreifen (7) ein Moirée-Muster angeordnet ist, das aus der Überlagerung von wenigstens zwei linienförmigen nicht identischen Kurvenscharen ausgebildet entsteht,
**dadurch gekennzeichnet,**
**dass** im zweiten Oberflächenbereich auf dem Seitenwandgummistreifen (7) ein Moirée-Muster angeordnet ist, das aus der Überlagerung von wenigstens zwei linienförmigen nicht identischen Kurvenscharen ausgebildet entsteht, und
**dass** im ersten Oberflächenbereich auf dem Seitenwandgummistreifen (7) ein Moireefreies Muster angeordnet ist, das aus einer oder mehreren linienförmigen Kurvenscharen ausgebildet ist.

2. Fahrzeugluftreifen gemäß den Merkmalen von Anspruch 1,
dass im Übergang der beiden in Umfangsrichtung des Fahrzeugluftreifens benachbarten Oberflächenbereiche Kurven einer ersten Kurvenschar des ersten Umfangsabschnitts fließend in jeweils eine Kurve einer ersten Kurvenschar des zweiten Umfangsabschnitts übergehen.

3. Fahrzeugluftreifen gemäß den Merkmalen von Anspruch 2,
dass im Übergang der beiden in Umfangsrichtung des Fahrzeugluftreifens benachbarten Oberflächenbereiche Kurven einer zweiten Kurvenschar des ersten Umfangsabschnitts fließend in jeweils eine Kurve einer zweiten Kurvenschar des zweiten Umfangsabschnitts übergehen.

4. Fahrzeugluftreifen gemäß den Merkmalen von einem oder mehreren der vorangegangenen Ansprüche,
dass im Übergang der beiden in Umfangsrichtung des Fahrzeugluftreifens benachbarten Oberflächenbereiche jeweils eine Kurve einer ersten Kurvenschar des ersten Umfangsabschnitts fließend in jeweils eine Kurve einer ersten Kurvenschar des zweiten Umfangsabschnitts übergehen.

5. Fahrzeugluftreifen gemäß den Merkmalen von von einem oder mehreren der vorangegangenen Ansprüche,
dass im Übergang der beiden in Umfangsrichtung des Fahrzeugluftreifens benachbarten Oberflächenbereiche jeweils eine Kurve einer zweiten Kurvenschar des ersten Umfangsabschnitts fließend in die Kurven einer zweiten Kurvenschar des zweiten Umfangsabschnitts übergehen.

6. Fahrzeugluftreifen gemäß den Merkmalen von von einem oder mehreren der vorangegangenen Ansprüche,
dass im Übergang der in Umfangsrichtung benachbarten Oberflächenbereiche die Kurven der Kurvenschar des ersten Oberflächenbereichs eine gleiche Steigung zur Umfangsrichtung aufweisen wie die in Umfangsrichtung benachbarte Kurve des der einen Kurvenschar des zweiten Oberflächenbereichs.

7. Fahrzeugluftreifen gemäß den Merkmalen von einem oder mehreren der vorangegangenen Ansprüche,
dass die erste Kurvenschar des zweiten Oberflächenbereichs aus wellenförmigen Kurven mit regelmäßiger Wellenform und die zweite Kurvenschar des zweiten Oberflächenbereichs aus wellenförmigen Kurven mit unregelmäßiger Wellenform ausgebildet ist.

8. Fahrzeugluftreifen gemäß den Merkmalen von einem oder mehreren der vorangegangenen Ansprüche,
wobei die erste Kurvenschar des zweiten Oberflächenbereichs aus wellenförmigen Kurven ausgebildet ist, die sich in Umfangsrichtung des Fahrzeugluftreifens erstrecken.

9. Fahrzeugluftreifen gemäß den Merkmalen von von einem oder mehreren der vorangegangenen Ansprüche,
wobei die zweite Kurvenschar des zweiten Oberflächenbereichs aus wellenförmigen Kurven mit unregelmäßiger Wellenform ausgebildet ist, die sich in Umfangsrichtung des Fahrzeugluftreifens erstrecken.

10. Fahrzeugluftreifen gemäß den Merkmalen von einem oder mehreren der vorangegangenen Ansprüche,
wobei die zweite Kurvenschar des zweiten Oberflächenbereichs aus wellenförmigen Kurven mit unregelmäßiger Frequenz ihrer Wellenform ausgebildet ist.

11. Fahrzeugluftreifen gemäß den Merkmalen von einem oder mehreren der vorangegangenen Ansprüche,
wobei die zweite Kurvenschar des zweiten Oberflächenbereichs aus wellenförmigen Kurven mit längs ihrer Wellenausbreitung veränderter Amplitude ausgebildet ist.

12. Fahrzeugluftreifen gemäß den Merkmalen von einem oder mehreren der vorangegangenen Ansprüche,
wobei das Moirée-freie Muster des ersten Oberflächenbereichs wenigstens eine Kurvenschar aus geradlinigen Kurven aufweist.

13. Fahrzeugluftreifen gemäß den Merkmalen von einem oder mehreren der vorangegangenen Ansprüche,
wobei das Moirée-freie Muster des ersten Oberflächenbereichs wenigstens eine Kurvenschar aus an eine Kreiszylindermantelfläche eines insbesondere zum Fahrzeugluftreifen konzentrischen Zylinders anliegenden Tangenten ausgebildet ist.

14. Fahrzeugluftreifen gemäß den Merkmalen von Anspruch 13,
wobei der Radius der Kreiszylindermantelfläche kleiner ist als der Radius eines konzentrisch zur Fahrzeugluftreifen ausgebildeten Zylinders, der die die erste Oberfläche nach radial innen am Fahrzeugluftreifen tangential begrenzt.

15. Fahrzeugluftreifen gemäß den Merkmalen von einem oder mehreren der vorangegangenen Ansprüche,
wobei in wenigstens zwei in Umfangsrichtung des Fahrzeugluftreifens jeweils voneinander beabstandeten ersten Oberflächenbereichen des Seitenwandgummistreifens (7) Zeichen zur Informationsvermittlung ausgebildet sind,
wobei wenigstens in einem in Umfangsrichtung des Fahrzeugluftreifens zwischen den beiden ersten Oberflächenbereichen jeweils an die ersten Oberflächenbereiche anschließenden zweiten Oberflächenbereich des Seitenwandgummistreifens (7) frei von Zeichen zur Informationsvermittlung ausgebildet ist.

## Claims

1. Pneumatic vehicle tyre with a carcass, in particular of a radial type of construction, with sidewalls and with a tread rubber (1),
the carcass being covered in the outward direction in the sidewall region by a sidewall rubber strip (7),
indicia for conveying information being formed in at least a first surface region of the sidewall rubber strip (7),
at least a second surface region of the sidewall rubber strip (7), adjoining the first surface region in the circumferential direction of the pneumatic vehicle tyre, being formed without any indicia for conveying information,
a moiré pattern that is created by superimposing at least two linear, non-identical groups of curves being arranged on the surface of the sidewall rubber strip (7),
**characterized**
**in that** a moiré pattern that is created by superimposing at least two linear, non-identical groups of curves is arranged in the second surface region on the sidewall rubber strip (7), and
**in that** a moiré pattern that is formed by one or more groups of linear curves is arranged in the first surface region on the sidewall rubber strip (7).

2. Pneumatic vehicle tyre according to the features of Claim 1, **characterized in that**, at the transition of the two surface regions adjacent to each other in the circumferential direction of the pneumatic vehicle tyre, curves of a first group of curves of the first circumferential portion smoothly merge respectively with a curve of a first group of curves of the second circumferential portion.

3. Pneumatic vehicle tyre according to the features of Claim 2, **characterized in that**, at the transition of the two surface regions adjacent to each other in the circumferential direction of the pneumatic vehicle tyre, curves of a second group of curves of the first circumferential portion smoothly merge respectively with a curve of a second group of curves of the second circumferential portion.

4. Pneumatic vehicle tyre according to the features of one or more of the preceding claims, **characterized in that**, at the transition of the two surface regions adjacent to each other in the circumferential direction of the pneumatic vehicle tyre, in each case a curve of a first group of curves of the first circumferential portion smoothly merges respectively with a curve of a first group of curves of the second circumferential portion.

5. Pneumatic vehicle tyre according to the features of one or more of the preceding claims, **characterized in that**, at the transition of the two surface regions adjacent to each other in the circumferential direction of the pneumatic vehicle tyre, in each case a curve of a second group of curves of the first circumferential portion smoothly merges respectively with the curves of a second group of curves of the second circumferential portion.

6. Pneumatic vehicle tyre according to the features of one or more of the preceding claims, **characterized in that**, at the transition of the surface regions adjacent to each other in the circumferential direction, the curves of the group of curves of the first surface region have an identical slope in relation to the circumferential direction as the adjacent curve in the circumferential direction of the one group of curves of the second surface region.

7. Pneumatic vehicle tyre according to the features of one or more of the preceding claims, **characterized in that** the first group of curves of the second surface region is formed by wavy curves with a regular waveform and the second group of curves of the second surface region is formed by wavy curves with an irregular waveform.

8. Pneumatic vehicle tyre according to the features of one or more of the preceding claims, the first group of curves of the second surface region being formed by wavy curves which extend in the circumferential direction of the pneumatic vehicle tyre.

9. Pneumatic vehicle tyre according to the features of one or more of the preceding claims, the second group of curves of the second surface region being formed by wavy curves with an irregular waveform which extend in the circumferential direction of the pneumatic vehicle tyre.

10. Pneumatic vehicle tyre according to the features of one or more of the preceding claims, the second group of curves of the second surface region being formed by wavy curves with an irregular frequency of their waveform.

11. Pneumatic vehicle tyre according to the features of one or more of the preceding claims, the second group of curves of the second surface region being formed by wavy curves with an amplitude that changes along their wave propagation.

12. Pneumatic vehicle tyre according to the features of one or more of the preceding claims, the moiré-free pattern of the first surface region having at least one group of curves comprising straight curves.

13. Pneumatic vehicle tyre according to the features of one or more of the preceding claims, the moiré-free pattern of the first surface region being formed by at least one group of curves comprising tangents to a circular cylindrical lateral surface of a cylinder that is in particular concentric in relation to the pneumatic vehicle tyre.

14. Pneumatic vehicle tyre according to the features of Claim 13, the radius of the circular cylindrical lateral surface being less than the radius of a cylinder formed concentrically in relation to the pneumatic vehicle tyre that tangentially delimits the first surface radially inwards on the pneumatic vehicle tyre.

15. Pneumatic vehicle tyre according to the features of one or more of the preceding claims,
indicia for conveying information being formed in at least two first surface regions of the sidewall rubber strip (7) respectively spaced apart from each other in the circumferential direction of the pneumatic vehicle tyre,
at least a second surface region of the sidewall rubber strip (7), between the two first surface regions and adjoining the two first surface regions in the circumferential direction of the pneumatic vehicle tyre, being formed without any indicia for conveying information.

## Revendications

1. Bandage pneumatique pour roue de véhicule, qui présente une carcasse, en particulier à structure radiale, dotée de parois latérales et d'une bande de roulement (1),
l'extérieur de la partie de paroi latérale de la carcasse étant recouverte par une bande (7) de caoutchouc de paroi latérale,
des signes de transmission d'information étant formés dans au moins une première partie de surface de la bande (7) de caoutchouc de paroi latérale,
au moins une deuxième partie de surface de la bande (7) de caoutchouc de paroi latérale qui se raccorde à la première partie de surface dans la direction périphérique du bandage pour roue de véhicule étant exempte de signes de transmission d'information,
un motif moiré obtenu par superposition d'au moins deux ensembles de courbes linéaires non identiques étant obtenu sur la surface du ruban (7) de caoutchouc de paroi latérale,
**caractérisé en ce que**
un motif moiré obtenu par superposition d'au moins deux ensembles de courbes linéaires non identiques est disposé dans la deuxième partie de surface de la bande (7) de caoutchouc de paroi latérale et
**en ce qu'**un motif non moiré formé d'un ou plusieurs ensembles de courbes linéaires est disposé dans la première partie de surface de la bande (7) de caoutchouc de paroi latérale.

2. Bandage pneumatique pour roue de véhicule selon les caractéristiques de la revendication 1, **caractérisé en ce qu'**à la transition entre les deux parties de surface voisines dans la direction périphérique du bandage pneumatique pour roue de véhicule, chacune des courbes d'un premier ensemble de courbes de la première partie périphérique se prolonge sans discontinuité en une courbe d'un premier ensemble de courbes de la deuxième partie périphérique.

3. Bandage pneumatique pour roue de véhicule selon les caractéristiques de la revendication 2, **caractérisé en ce qu'**à la transition entre les deux parties de surface voisines dans la direction périphérique du bandage pneumatique pour roue de véhicule, chacune des courbes d'un deuxième ensemble de courbes de la première partie périphérique se prolonge sans discontinuité en une courbe d'un deuxième ensemble de courbes de la deuxième partie périphérique.

4. Bandage pneumatique pour roue de véhicule selon les caractéristiques d'une ou plusieurs des revendications précédentes, **caractérisé en ce qu'**à la transition entre les deux parties de surface voisines dans la direction périphérique du bandage pneumatique pour roue de véhicule, chaque courbe d'un premier ensemble de la première partie périphérique se prolonge sans discontinuité en une courbe d'un premier ensemble de courbes de la deuxième partie périphérique.

5. Bandage pneumatique pour roue de véhicule selon les caractéristiques d'une ou plusieurs des revendications précédentes, **caractérisé en ce qu'**à la transition entre les deux parties de surface voisines de la direction périphérique du bandage pneumatique pour roue de véhicule, chaque courbe d'un deuxième ensemble de courbes de la première partie périphérique se prolonge sans discontinuité en une courbe d'un deuxième ensemble de courbes de la deuxième partie périphérique.

6. Bandage pneumatique pour roue de véhicule selon les caractéristiques d'une ou plusieurs des revendications précédentes, **caractérisé en ce qu'**à la transition entre les deux parties de surface voisines de la direction périphérique du bandage pneumatique pour roue de véhicule, les courbes de l'ensemble de courbes de la première partie de surface présentent par rapport à la direction périphérique la même pente que les courbes, voisines dans la direction périphérique, du premier ensemble de courbes de la deuxième partie de surface.

7. Bandage pneumatique pour roue de véhicule selon les caractéristiques d'une ou plusieurs des revendications précédentes, **caractérisé en ce que** le premier ensemble de courbes de la deuxième partie de surface est formé de courbes ondulées à ondulations de forme régulière et **en ce que** le deuxième ensemble de courbes de la deuxième partie de surface est formé de courbes ondulées à ondulations de forme irrégulière.

8. Bandage pneumatique pour roue de véhicule selon les caractéristiques d'une ou plusieurs des revendications précédentes, **caractérisé en ce que** le premier ensemble de courbes de la deuxième partie de surface est formé de courbes ondulées qui s'étendent dans la direction périphérique du bandage pneumatique pour roue de véhicule.

9. Bandage pneumatique pour roue de véhicule selon les caractéristiques d'une ou plusieurs des revendications précédentes, dans lequel le deuxième ensemble de courbes de la deuxième partie de surface est formé de courbes ondulées à ondulations de forme irrégulière qui s'étendent dans la direction périphérique du bandage pneumatique pour roue de véhicule.

10. Bandage pneumatique pour roue de véhicule selon les caractéristiques d'une ou plusieurs des revendications précédentes, dans lequel le deuxième ensemble de courbes de la deuxième partie de surface est formé de courbes ondulées dont la forme a une fréquence irrégulière.

11. Bandage pneumatique pour roue de véhicule selon les caractéristiques d'une ou plusieurs des revendications précédentes, dans lequel le deuxième ensemble de courbes de la deuxième partie de surface est formé de courbes ondulées dont l'amplitude varie le long de l'extension.

12. Bandage pneumatique pour roue de véhicule selon les caractéristiques d'une ou plusieurs des revendications précédentes, dans lequel le motif non moiré de la première partie de surface présente au moins un ensemble de courbes rectilignes.

13. Bandage pneumatique pour roue de véhicule selon les caractéristiques d'une ou plusieurs des revendications précédentes, dans lequel le motif non moiré de la première partie de surface présente au moins un ensemble de courbes constitué de tangentes appliquées sur la surface d'enveloppe cylindrique circulaire d'un cylindre en particulier concentrique par rapport au bandage pneumatique pour roue de véhicule.

14. Bandage pneumatique pour roue de véhicule selon les caractéristiques de la revendication 13, dans lequel le rayon de la surface d'enveloppe cylindrique circulaire est plus petit que le rayon d'un cylindre formé de manière concentrique par rapport au bandage pneumatique pour roue de véhicule qui limite tangentiellement la première surface située radialement à l'intérieur du bandage pneumatique pour roue de véhicule.

15. Bandage pneumatique pour roue de véhicule selon les caractéristiques d'une ou plusieurs des revendications précédentes, dans lequel des signes de transmission d'information sont formés dans au moins deux premières parties de surface de la bande (7) de caoutchouc de paroi latérale situées à distance l'une de l'autre dans la direction périphérique du bandage pneumatique pour roue de véhicule et dans lequel au moins une deuxième partie de surface de la bande (7) de caoutchouc de paroi latérale qui se raccorde aux premières parties de surface dans la direction périphérique du bandage pneumatique pour roue de véhicule entre les deux premières parties de surface est exempte de signes de transmission d'information.
